# EUROPÄISCHE PATENTSCHRIFT

(11) **EP 3 516 670 B1**
(45) Veröffentlichungstag und Bekanntmachung des Hinweises auf die Patenterteilung: **29.12.2021**
(21) Anmeldenummer: 17771722.0
(22) Anmeldetag: 18.09.2017
(51) Int. Cl.: H01F 29/02, H01F 38/14, H02J 50/10, H02J 50/90

(54) **VORRICHTUNG UND VERFAHREN ZUR ERZEUGUNG EINES ELEKTROMAGNETISCHEN FELDS ZUR INDUKTIVEN ENERGIEÜBERTRAGUNG**
DEVICE AND METHOD FOR GENERATING AN ELECTROMAGNETIC FIELD FOR INDUCTIVE ENERGY TRANSMISSION
DISPOSITIF ET PROCÉDÉ POUR GÉNÉRER UN CHAMP ÉLECTROMAGNÉTIQUE POUR LE TRANSFERT D'ÉNERGIE PAR INDUCTION

(30) Priorität: 20.09.2016 DE 102016218026
(43) Veröffentlichungstag der Anmeldung: 31.07.2019
(73) Patentinhaber: Laird Dabendorf GmbH, 15806 Zossen (DE)
(72) Erfinder: ZIEHM, Stefan, 15806 Zossen (DE); BÜCH, Dennis-Patrick, 15827 Blankenfelde-Mahlow (DE)
(74) Vertreter: Ramrath, Lukas
(86) Internationale Anmeldenummer: PCT/EP2017/073394
(87) Internationale Veröffentlichungsnummer: WO 2018/054802

(56) Entgegenhaltungen:
- DE-A1-102014 220 978
- US-A1- 2009 014 892
- US-A1- 2011 169 337
- US-A1- 2012 007 437
- US-A1- 2015 372 498

## Beschreibung

Die Erfindung betrifft eine Vorrichtung und ein Verfahren zur Erzeugung eines elektromagnetischen Felds zur induktiven Energieübertragung zu einem mobilen Endgerät.

Die induktive Energieübertragung stellt eine Möglichkeit einer kabelungebundenen Energieübertragung dar. Hierbei erzeugt eine sogenannte Primärwindungsstruktur ein elektromagnetisches Feld, welches auch als Leistungsübertragungsfeld bezeichnet werden kann. Dieses Leistungsübertragungsfeld oder zumindest ein Teil davon kann von einer sogenannten Sekundärwindungsstruktur empfangen werden, wobei das Leistungsübertragungsfeld in der Sekundärwindungsstruktur einen Strom induziert. Dieser induzierte Strom kann dann z.B. gleichgerichtet und zum Laden eines Akkumulators genutzt werden.

Weiter ist bekannt, dass mobile Endgeräte, z.B. Smartphones, Tablets und weitere mobile Endgeräte, induktiv geladen werden können. Hierbei umfassen diese Endgeräte die Sekundärwindungsstruktur und der Akkumulator.

Weiter ist bekannt, Vorrichtungen zur Erzeugung eines elektromagnetischen Felds in Fahrzeugen anzuordnen, um das induktive Laden von Endgeräten im Fahrzeug, z.B. während der Fahrt, zu ermöglichen. Hierbei werden die mobilen Endgeräte auf eine Auflagefläche der Vorrichtung aufgelegt, wobei unter der Auflagefläche die Primärwindungsstruktur angeordnet ist.

Eine effektive induktive Energieübertragung ist jedoch insbesondere nur dann möglich, wenn sich die Sekundärwindungsstruktur in einer vorbestimmten Relativlage bezüglich der Primärwindungsstruktur befindet. Beispielsweise kann dies der Fall sein, wenn die Sekundärwindungsstruktur möglichst genau über der Primärwindungsstruktur angeordnet ist.

Primärwindungsstrukturen sind in der Regel ortsfest angeordnet, insbesondere in einer entsprechenden Ladevorrichtung. Somit sind Primärwindungsstrukturen auch ortsfest relativ zur Auflagefläche angeordnet. Weiter können geometrische Formen und Größen der Sekundärwindungsstrukturen der mobilen Endgeräte variieren. Z.B. können verschiedene Hersteller von Endgeräten Sekundärwindungsstrukturen mit verschiedenen Formen und/oder Größen in die mobilen Endgeräte einbauen.

Weiter kann das mobile Endgerät auch in verschiedenen Lagen auf der Auflagefläche und somit in verschiedenen Lagen relativ zur Primärwindungsstruktur angeordnet werden. So ist z.B. vorstellbar, dass während der Fahrt aufgrund von Beschleunigungskräften die Lage des mobilen Endgeräts auf der Auflagefläche verändert.

Aufgrund der verschiedenen Größen und/oder Formen der Sekundärwindungsstruktur sowie aufgrund einer Abweichung der Relativlage von einer optimalen Relativlage kann sich die Effizienz der induktiven Energieübertragung in ungewünschter Weise reduzieren. Beispielsweise kann es zum Abbruch bzw. zum Nichtzustandekommen des Ladevorgangs kommen.

Die US 2012/007437 A1 beschreibt ein System zur induktiven Energieübertragung mit einer Primär- und einer Sekundäreinheit, die separat von der Primäreinheit ist, wobei die Primäreinheit eine Leistungsübertragungsfläche und mehr als zwei Feldgeneratoren aufweist, die jeder zum Erzeugen eines elektromagnetischen Felds betreibbar sind, wobei die Feldgeneratoren an verschiedenen Positionen relativ zur Leistungsübertragungsfläche angeordnet sind.

Die US 2011/169337 A1 betrifft eine Leistungserzeugungseinrichtung, eine Leistungsempfangseinrichtung und ein drahtloses Leistungsübertragungssystem.

Die US 2015/372498 A1 offenbart eine Leistungsempfangseinrichtung, eine Leistungsübertragungseinrichtung und ein Leistungsübertragungssystem.

Die DE 10 2014 220978 A1 offenbart eine Spulenanordnung zur induktiven Energieübertragung und eine induktive Energieübertragungsvorrichtung.

Die US 2009/014892 A1 betrifft eine integrierte Schalteinrichtung zur Signalübertragung. Es stellt sich das technische Problem, eine Vorrichtung und ein Verfahren zur Erzeugung eines elektromagnetischen Felds zur induktiven Energieübertragung zu einem mobilen Endgerät, zu schaffen, welche eine möglichst effiziente Energieübertragung für verschiedene Formen, Größen und/oder Raumlagen der Sekundärwindungsstruktur ermöglichen.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

Vorgeschlagen wird eine Vorrichtung zur Erzeugung eines elektromagnetischen Felds zur induktiven Energieübertragung. Die Vorrichtung kann auch als induktive Ladevorrichtung bezeichnet werden. Die Vorrichtung dient zur induktiven Energieübertragung zu einem mobilen Endgerät, beispielsweise zu einem Smartphone oder Tablet oder einem sonstigen mobilen Endgerät.

Die Vorrichtung kann insbesondere in einem Fahrzeug angeordnet sein. Es ist möglich, dass die Vorrichtung eine Auflagefläche, insbesondere eine ungekrümmte Auflagefläche, für das mobile Endgerät aufweist. Diese Auflagefläche kann insbesondere in, auf oder an einer Mittelkonsole des Fahrzeugs angeordnet sein. Die Auflagefläche kann hierbei orthogonal zu einer Vertikalrichtung orientiert sein, wobei die Vertikalrichtung parallel zu der Richtung der Gravitationskraft orientiert sein kann. Auch kann die Auflagefläche orthogonal zu einer Hochachse (Gierachse) des Fahrzeugs orientiert sein. Allerdings ist es auch möglich, dass die Auflagefläche in, an oder auf einer Türkonsole, beispielsweise einer Türinnenwand, angeordnet ist. In diesem Fall kann die Auflagefläche senkrecht zu einer Querachse (Nickachse) des Fahrzeugs orientiert sein.

Die Vorrichtung umfasst mehrere elektrische Verbindungselemente und mindestens ein Schaltelement. Unter einem elektrischen Verbindungselement kann hierbei ein Mittel zur elektrischen Verbindung verstanden werden. Ein elektrisches Verbindungselement kann hierbei z.B. durch eine elektrische Leitung, z.B. ein Kabel oder Draht, oder durch eine Leiterbahn, z.B. auf einer Leiterplatte, bereitgestellt werden. Ein elektrisches Verbindungselement kann hierbei eine beliebige geometrische Ausbildung aufweisen. Vorzugsweise ist jedoch ein elektrisches Verbindungselement ein gerades, ungekrümmtes Verbindungselement. Wie nachfolgend noch näher erläutert, kann ein elektrisches Verbindungselement ein Teilstück oder Segment einer Primärwindungsstruktur bilden, wobei die Primärwindungsstruktur aus mindestens einem Verbindungselement, vorzugsweise jedoch aus mehreren Verbindungselementen, ausgebildet sein kann.

Weiter umfasst die Vorrichtung mindestens ein Schaltelement. Ein Schaltelement kann hierbei mindestens zwei voneinander verschiedene Schaltzustände einnehmen. Es ist jedoch auch vorstellbar, dass ein Schaltelement mehr als zwei voneinander verschiedene Schaltzustände einnimmt. Durch das mindestens eine Schaltelement sind mindestens zwei elektrische Verbindungselemente elektrisch verbindbar.

Es ist z.B. vorstellbar, dass in einem ersten Schaltzustand die mindestens zwei elektrischen Verbindungselemente elektrisch miteinander verbunden sind, wobei in einem weiteren Schaltzustand die elektrische Verbindung der Verbindungselemente durch das Schaltelement unterbrochen ist. In diesem weiteren Schaltzustand kann eines der beiden elektrischen Verbindungselemente mit einem weiteren elektrischen Verbindungselement durch das Schaltelement verbunden sein.

Das Schaltelement kann insbesondere ein elektronisches Schaltelement sein. Beispielsweise kann das Schaltelement als MOSFET oder IBGT ausgebildet sein oder einen solchen Transistor umfassen.

Vorzugsweise umfasst die Vorrichtung mehrere Schaltelemente. Hierbei kann jeweils eines dieser Schaltelemente verschiedene elektrische Verbindungselemente elektrisch verbinden.

Weiter bilden in einem ersten Schaltzustand des mindestens einen Schaltelements die elektrischen Verbindungselemente eine Spulenstruktur mit ersten Spuleneigenschaften aus. Eine Spulenstruktur bezeichnet hierbei eine Struktur aus mindestens einem elektrischen Verbindungselement, vorzugsweise jedoch aus mehreren elektrischen Verbindungselementen, die ein elektromagnetisches Feld erzeugt, wenn ein Stromfluss durch die Spulenstruktur erzeugt wird. Das elektromagnetische Feld kann hierbei insbesondere das Leistungsübertragungsfeld erzeugen. Somit bildet die Spulenstruktur eine Primärwindungsstruktur.

Eine Spuleneigenschaft kann insbesondere eine Größe der Spulenfläche sein. Die Spulenfläche kann hierbei die von dem/den elektrischen Verbindungselement(en) umfasste Fläche bezeichnen. Eine weitere Spuleneigenschaft kann eine Position der Spulenstruktur sein. Eine Position kann insbesondere eine Position eines Referenzpunktes der Spulenstruktur, beispielsweise eines geometrischen Mittelpunkts, bezeichnen. Die Position kann hierbei in einem Referenzkoordinatensystem, insbesondere einem primärseitigen Referenzkoordinatensystem, gegeben sein. Eine weitere Spuleneigenschaft kann eine geometrische Form der Spulenstruktur sein.

In einem weiteren Schaltzustand des mindestens einen Schaltelements bilden die elektrischen Verbindungselemente eine Spulenstruktur mit weiteren Spuleneigenschaften aus. Hierbei kann mindestens eine Spuleneigenschaft der weiteren Spulenstruktur von der entsprechenden Eigenschaft der ersten Spulenstruktur verschieden sein.

Somit sind die elektrischen Verbindungselemente der Vorrichtung und das mindestens eine Schaltelement der Vorrichtung derart angeordnet und/oder ausgebildet, dass in verschiedenen Schaltzuständen des Schaltelements voneinander verschiedene Spulenstrukturen ausbildbar sind.

Die elektrischen Verbindungselemente können hierbei unter der erläuterten Auflagefläche angeordnet sein, beispielsweise mit einem vorbestimmten Abstand. Dies kann insbesondere bedeuten, dass, wenn ein Endgerät auf der Auflagefläche aufliegt, die elektrischen Verbindungselemente auf der gegenüberliegenden Seite des Endgeräts angeordnet sind.

Die Vorrichtung ermöglicht hierbei in vorteilhafter Weise die Ausbildung und somit Bereitstellung verschiedener Spulenstrukturen zur Erzeugung des elektromagnetischen Felds. Insbesondere kann durch Einstellung eines Schaltzustands aus der Anzahl möglicher Schaltzustände eine Spulenstruktur bereitgestellt oder ausgebildet werden, die eine induktive Energieübertragung mit maximal möglicher Effizienz zu einem Endgerät ermöglicht, welches auf der Auflagefläche aufliegt und welches eine Sekundärwindungsstruktur mit einer bestimmten Größe und Geometrie aufweist. Insbesondere kann somit ein Streufeldanteil bei der induktiven Energieübertragung verringert werden.

Das mindestens eine Schaltelement kann hierbei als Trennschaltelement oder als Umschaltelement ausgebildet sein. Umfasst die Vorrichtung mehrere Schaltelemente, können alle Schaltelemente als Trennschaltelemente oder Umschaltelemente ausgebildet sein. In diesem Fall ist es jedoch auch möglich, dass mindestens ein Schaltelement als Trennschaltelement und mindestens ein Schaltelement als Umschaltelement ausgebildet ist. Hierbei bezeichnet ein Trennschaltelement ein Schaltelement, welches einen geschlossenen Zustand und einen geöffneten Zustand einnehmen kann, wobei im geschlossenen Zustand eine elektrische Verbindung zwischen mindestens zwei elektrischen Verbindungselementen hergestellt ist. Im geöffneten Zustand ist durch das Trennschaltelement keine elektrische Verbindung zwischen elektrischen Verbindungselementen hergestellt. Ein Umschaltelement kann ein Schaltelement bezeichnen, welches in einem ersten Schaltzustand mindestens zwei elektrische Verbindungselemente elektrisch verbindet und in einem weiteren Schaltzustand ebenfalls zwei elektrische Verbindungselemente verbindet, wobei jedoch mindestens eines der verbundenen Verbindungselemente von den im ersten Schaltzustand verbundenen Verbindungselementen verschieden ist.

Erfindungsgemäß sind durch das mindestens eine Schaltelement mindestens drei elektrische Verbindungselemente elektrisch verbindbar. Im ersten Schaltzustand ist ein erstes elektrisches Verbindungselement mit einem zweiten elektrischen Verbindungselement elektrisch verbunden, wobei in dem mindestens einen weiteren Schaltzustand das erste elektrische Verbindungselement mit einem weiteren elektrischen Verbindungselement elektrisch verbunden ist. In diesem Fall bildet also das Schaltelement ein Umschaltelement aus.

Hierdurch ergibt sich in vorteilhafter Weise eine größere Variabilität bei der Ausbildung verschiedener Spulenstrukturen mit einer geringen Anzahl von Schaltelementen.

In einer weiteren Ausführungsform sind durch das mindestens eine Schaltelement elektrische Verbindungselemente zu mindestens einer, vorzugsweise jedoch zu mehreren, polygonalen Spulenstruktur(en) verschaltbar. Somit können in verschiedenen Schaltzuständen des mindestens einen Schaltelements voneinander verschiedene polygonale Spulenstrukturen ausgebildet werden. Weiter ist das mindestens eine Schaltelement an einem Eckpunkt der polygonalen Spulenstruktur angeordnet. In diesem Fall können also elektrische Verbindungselemente Kanten der polygonalen Spulenstruktur ausbilden, wobei voneinander verschiedene, insbesondere benachbarte, Kanten der polygonalen Spulenstruktur durch ein Schaltelement elektrisch verbunden werden können.

Durch die Ausbildung polygonaler Spulenstrukturen ergibt sich in vorteilhafter Weise eine möglichst großflächige und lückenlose Abdeckung einer maximalen Ladefläche durch bereitstellbare und voneinander verschiedene Spulenstrukturen, wobei die maximale Ladefläche einer maximal bereitstellbaren Spulenfläche entsprechen kann. Insbesondere kann ein elektrisches Verbindungselement eine Kante mehrerer, z.B. von mindestens zwei, bereitstellbaren polygonalen Spulenstrukturen ausbilden. In diesem Fall kann ein elektrisches Verbindungselement z.B. in einem ersten Schaltzustand mindestens eines Schaltelements Teil einer ersten polygonalen Spulenstruktur und in einem weiteren Schaltzustand des mindestens einen Schaltelements Teil einer weiteren polygonalen Spulenstruktur sein.

Eine polygonale Spulenstruktur kann hierbei eine dreieckige Spulenstruktur, eine viereckige Spulenstruktur, eine fünfeckige Spulenstruktur, eine sechseckige Spulenstruktur oder aber auch eine Spulenstruktur mit mehr als sechs Ecken sein. Wie nachfolgend noch näher erläutert, ist die polygonale Spulenstruktur vorzugsweise eine hexagonale Spulenstruktur.

In einer weiteren Ausführungsform sind die elektrischen Verbindungselemente zu mindestens einer hexagonalen Spulenstruktur verschaltbar. Somit kann also die mindestens eine hexagonale Spulenstruktur in einem bestimmten Schaltzustand des mindestens einen Schaltelements oder in bestimmten Schaltzuständen mehrerer Schaltelemente ausgebildet werden. Durch die Spulenflächen mehrerer voneinander verschiedenen hexagonaler Spulenstrukturen, die in verschiedenen Schaltzuständen des mindestens einen Schaltelements ausgebildet werden können, kann in vorteilhafter Weise eine maximale Ladefläche möglichst lückenlos abgedeckt werden, wobei gleichzeitig ein elektromagnetisches Leistungsübertragungsfeld mit gewünschten Eigenschaften erzeugbar ist.

In einer weiteren Ausführungsform ist ein Schaltelement an einem Eckpunkt mehrerer bereitstellbarer polygonaler Spulenstrukturen angeordnet. Mit anderen Worten kann das Schaltelement an einem Eckpunkt einer ersten bereitstellbaren polygonalen Spulenstruktur angeordnet sein, wobei dieser Eckpunkt gleichzeitig ein Eckpunkt mindestens einer oder aber mehrerer weiterer bereitstellbarer polygonaler Spulenstrukturen sein kann.

Hierdurch erhöht sich in vorteilhafter Weise die Variabilität bei der Ausbildung verschiedener Spulenstrukturen.

In einer weiteren Ausführungsform weist eine in einem Schaltzustand des mindestens einen Schaltelements oder in einem bestimmten Schaltzustand mehrerer Schaltelemente ausgebildete Spulenstruktur mehrere Windungen auf. Selbstverständlich ist es auch möglich, dass eine derart ausgebildete Spulenstruktur nur eine Windung aufweist. Durch die Bereitstellung einer Spulenstruktur mit mehreren Windungen erhöht sich jedoch in vorteilhafter Weise eine maximal übertragbare Leistung der ausgebildeten Spulenstruktur.

In einer weiteren Ausführungsform umfasst die Vorrichtung eine Kommunikationseinrichtung zur Datenübertragung zwischen einem Endgerät und einer Auswerteeinrichtung der Vorrichtung. In diesem Fall kann die Vorrichtung auch diese Auswerteeinrichtung umfassen.

Die Datenübertragung kann insbesondere eine drahtlose Datenübertragung sein, beispielsweise eine WLAN-basierte, eine Bluetooth^{™}-basierte, eine NFC-basierte Datenübertragung oder eine drahtlose Datenübertragung gemäß einem weiteren Standard. Hierbei kann die Kommunikationseinrichtung mindestens eine Antennenstruktur zum Verbinden und/oder Empfangen von Kommunikationssignalen umfassen. Diese Antennenstruktur kann hierbei von den ausbildbaren Spulenstrukturen der Vorrichtung verschieden sein. Die Auswerteeinrichtung kann hierbei als Mikrocontroller ausgebildet sein oder einen solchen umfassen.

Es ist möglich, dass das Endgerät, insbesondere nach einem Anmeldevorgang bei der Vorrichtung, Informationen zur benötigten Energieübertragung, beispielsweise eine Information zur benötigten Leistung, an die Auswerteeinrichtung überträgt. Auch kann das Endgerät Informationen zur Größe und/oder geometrischen Form der Sekundärwindungsstruktur des Endgeräts übertragen.

In Abhängigkeit der über die Kommunikationseinrichtung übertragenen Informationen kann dann der Schaltzustand des mindestens einen Schaltelements derart eingestellt werden, dass eine primärseitige Spulenstruktur ausgebildet wird, die an die benötigte Energieübertragung und die Größe und/oder Form der Sekundärwindungsstruktur angepasst ist.

Auch kann, wenn möglich, eine Information zur räumlichen Lage des Endgeräts oder zu einer Relativlage zwischen der Sekundär- und Primärwindungsstruktur an die Auswerteeinrichtung übertragen werden. In diesem Fall kann die Spulenstruktur durch Einstellen des Schaltzustands des mindestens einen Schaltelements auch in Abhängigkeit dieser Information bereitgestellt werden.

Hierdurch ergibt sich in vorteilhafter Weise eine zeitlich schnelle Einstellung der primärseitigen Spulenstruktur.

In einer weiteren Ausführungsform umfasst die Vorrichtung eine Steuereinrichtung zur Einstellung der Schaltzustände des mindestens einen Schaltelements. Die vorhergehend erläuterte Auswerteeinrichtung kann hierbei von dieser Steuereinrichtung umfasst werden. Die Steuereinrichtung kann somit ebenfalls als Mikrocontroller ausgebildet sein oder einen solchen umfassen.

Es ist weiter vorstellbar, dass die Auswerteeinrichtung Informationen zu den einzustellenden Schaltzuständen an die Steuereinrichtung überträgt. In Abhängigkeit dieser Informationen kann die Steuereinrichtung dann den Schaltzustand des mindestens einen Schaltelementes einstellen.

In einer weiteren Ausführungsform umfasst die Vorrichtung mindestens ein Mittel zur Ermittlung einer Relativlage zwischen einer Sekundärwindungsstruktur des Endgeräts, insbesondere im aufgelegten Zustand, und den elektrischen Verbindungselementen der Vorrichtung. Weiter sind Spuleneigenschaften einer auszubildenden Spulenstruktur in Abhängigkeit der Relativlage bestimmbar, wobei der Schaltzustand des mindestens einen Schaltelements in Abhängigkeit dieser Spuleneigenschaften eingestellt wird, insbesondere derart, dass eine Spulenstruktur mit diesen Spuleneigenschaften ausgebildet wird.

Alternativ, vorzugsweise kumulativ, ist es auch möglich, die Spuleneigenschaften in Abhängigkeit einer geometrischen Ausbildung und/oder einer Größe der Sekundärwindungsstruktur zu bestimmen. Diese Informationen können mittels geeigneten Bestimmungsmitteln bestimmt werden. Auch können diese Informationen vom Endgerät an die Vorrichtung übertragen werden.

Das Mittel zur Ermittlung der Relativlage ermöglicht hierbei also z.B. die Bestimmung einer räumlichen Lage der Sekundärwindungsstruktur in einem primärseitigen Referenzkoordinatensystem. Beispielsweise kann die Relativlage in Abhängigkeit einer Signalstärke, beispielsweise eines Signalpegels, und/oder einer Signalrichtung eines von der Kommunikationseinrichtung empfangenen Kommunikationssignals bestimmt werden.

Wie nachfolgend noch näher erläutert, ist es auch möglich, die Relativlage zu bestimmen, indem sequenziell verschiedene Spulenstrukturen ausgebildet werden und das Endgerät für jede der ausgebildeten Spulenstrukturen eine Information über die empfangene Leistung an die Vorrichtung überträgt. Hierbei kann z.B. die jeweils ausgebildete Spulenstruktur derart bestromt werden, dass jeweils die gleiche Sendeleistung des Leistungsübertragungsfelds eingestellt wird.

Weiter vorgeschlagen wird ein Verfahren zur Erzeugung eines elektromagnetischen Felds zur induktiven Energieübertragung zu einem mobilen Endgerät. Das Verfahren ist hierbei mittels einer Vorrichtung gemäß einer der in dieser Offenbarung beschriebenen Ausführungsformen durchführbar. Somit ist die Vorrichtung derart ausgebildet, dass ein solches Verfahren mittels der Vorrichtung ausführbar ist.

In dem Verfahren wird ein Schaltzustand des mindestens einen Schaltelements der Vorrichtung derart eingestellt, dass eine Spulenstruktur mit gewünschten Eigenschaften durch die elektrischen Verbindungselemente ausgebildet wird. Weiter wird ein Stromfluss durch diese Spulenstruktur erzeugt.

In dem Verfahren kann insbesondere eine Spulenstruktur bestimmt werden, die eine induktive Energieübertragung zum Endgerät mit gewünschten Übertragungseigenschaften ermöglicht. Der Schaltzustand des mindestens einen Schaltelements der Vorrichtung kann dann derart eingestellt, dass eine Spulenstruktur mit diesen gewünschten Eigenschaften durch die elektrischen Verbindungselemente ausgebildet wird. Auch kann die ausgebildete Spulenstruktur eine vorab festgelegte Spulenstruktur sein.

In einer weiteren Ausführungsform überträgt das Endgerät Informationen zur benötigten Energie an eine Steuer- und/oder Auswerteeinrichtung der Vorrichtung, wobei durch Einstellen der Schaltzustände des mindestens einen Schaltelements zeitlich nacheinander, also sequenziell, Spulenstrukturen mit voneinander verschiedenen Spuleneigenschaften ausgebildet werden. Weiter wird ein Stromfluss durch jede der ausgebildeten Spulenstrukturen erzeugt. Insbesondere wird der Stromfluss derart erzeugt, dass jeweils gleiche Sendeleistung des bei Stromfluss erzeugten Leistungsübertragungsfelds eingestellt wird. Weiter wird für jede ausgebildete Spulenstruktur die an das Endgerät übertragene Energie bestimmt. Diese kann beispielsweise endgeräteseitig bestimmt werden, insbesondere durch geeignete Mittel zur Erfassung der übertragenen Energie. Eine Information zur übertragenen Energie kann wiederum an die Steuer- und/oder Auswerteeinrichtung der Vorrichtung übertragen werden.

Weiter wird durch Einstellen der Schaltzustände des mindestens einen Schaltelements dann eine resultierende Spulenstruktur ausgebildet, mit der die übertragene Energie maximal ist oder mit der die benötigte Energie übertragen wird. Weiter wird ein Stromfluss durch die resultierende Spulenstruktur erzeugt.

Beispielsweise können somit sequenziell verschiedene Spulenstrukturen eingestellt werden, bis eine Spulenstruktur eingestellt ist, mit der die benötigte Energie übertragen werden kann. Selbstverständlich kann auch eine vorbestimmte Anzahl verschiedener Spulenstrukturen eingestellt werden, wobei dann die Spulenstruktur als resultierende Spulenstruktur eingestellt wird, mit der eine maximale Energieübertragung möglich ist.

Entspricht die übertragene Energie für keine dieser Spulenstrukturen der benötigten Energie, so kann der Ladevorgang abgesprochen oder nicht gestartet werden. Weiter kann ein entsprechendes Fehlersignal erzeugt werden.

In einer weiteren Ausführungsform ist die erste ausgebildete Spulenstruktur eine Spulenstruktur mit maximaler Spulenfläche. Die Spulenfläche wurde vorhergehend bereits erläutert. Weiter können die nachfolgend eingestellten Spulenstrukturen jeweils eine geringere Spulenfläche als die maximale Spulenfläche aufweisen.

Die Erfindung wird anhand von Ausführungsbeispielen näher erläutert. Die Figuren zeigen:
- Fig. 1: ein schematisches Blockschaltbild einer erfindungsgemäßen Vorrichtung,
- Fig. 2: einen schematischen Schaltplan einer Leiterbahnanordnung von Leiterbahnen,
- Fig. 3: einen schematischen Schaltplan einer weiteren Leiterbahnanordnung von Leiterbahnen,
- Fig. 4a: einen schematischen Schaltplan einer Leiterbahnanordnung von Leiterbahnen, die eine erste Spulenstruktur ausbildet,
- Fig. 4b: einen schematischen Schaltplan der in Fig. 4a dargestellten Leiterbahnanordnung, die eine weitere Spulenstruktur ausbildet,
- Fig. 5a: einen schematischen Schaltplan einer weiteren Leiterbahnanordnung, die eine erste Spulenstruktur ausbildet,
- Fig. 5b: einen schematischen Schaltplan der in Fig. 5a dargestellten Leiterbahnanordnung, die eine zweite Spulenstruktur ausbildet,
- Fig. 5c: einen schematischen Schaltplan der in Fig. 5a dargestellten Leiterbahnanordnung, die eine dritte Spulenstruktur ausbildet, und
- Fig. 6: einen schematischen Schaltplan von polygonalen Spulenstrukturen.

Nachfolgend bezeichnen gleiche Bezugszeichen Elemente mit gleichen oder ähnlichen technischen Merkmalen.

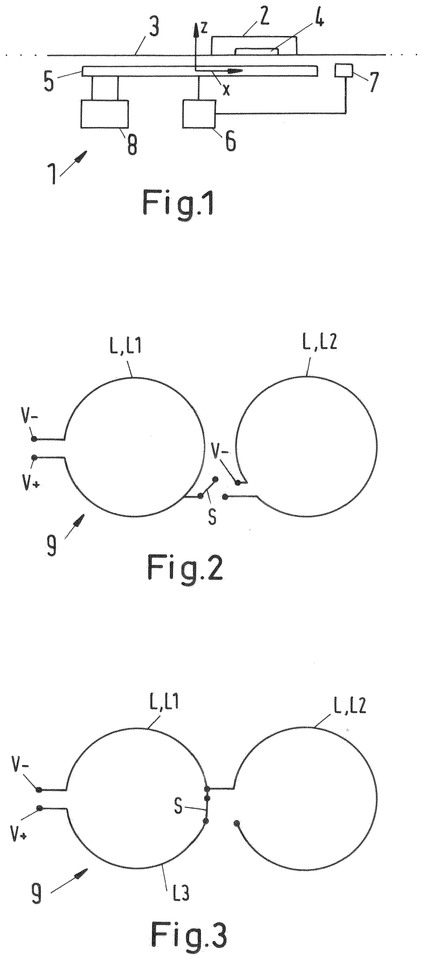

In Fig. 1 ist ein schematisches Blockschaltbild einer erfindungsgemäßen Vorrichtung 1 zur Erzeugung eines elektromagnetischen Felds zur induktiven Energieübertragung zu einem mobilen Endgerät 2 dargestellt. Die Vorrichtung 1 umfasst hierbei eine Auflagefläche 3 oder bildet eine Auflagefläche 3 aus. Auf der Auflagefläche 3 kann das Endgerät 2 aufgelegt werden. Das Endgerät 2 umfasst eine Sekundärwindungsstruktur 4 zum Empfangen eines Leistungsübertragungsfeldes, welches zur induktiven Energieübertragung dient. Das Leistungsübertragungsfeld wird von einer Primärwindungsstruktur 5 erzeugt. Die Primärwindungsstruktur 5 ist Teil der Vorrichtung 1. Die Primärwindungsstruktur 5 kann mehrere als Leiterbahnen L (siehe z.B. Fig. 2 oder Fig. 3) ausgebildete elektrische Verbindungselemente und ein oder mehrere Schaltelemente S (siehe z.B. Fig. 2 oder Fig. 3) umfassen.

In Fig. 1 ist auch ein schematisches primärseitiges Koordinatensystem dargestellt, wobei eine Längsachse x und eine Vertikalachse z dargestellt sind. Orientierungen der Achsen x, z sind symbolisch durch Pfeile dargestellt. Nicht dargestellt ist eine Querachse y des Koordinatensystems. Die Achsen x, y, z des Koordinatensystems können Achsen eines kartesischen Koordinatensystems sein. Die Längs- und Querachse x, y können eine Ebene festlegen, die parallel zur Auflagefläche 3 orientiert ist. Die Vertikalachse z kann orthogonal zur Auflagefläche 3 orientiert sein.

Weiter umfasst die Vorrichtung eine Steuereinrichtung 6 zur Einstellung von Schaltzuständen der verschiedenen Schaltelemente S. Weiter umfasst die Vorrichtung 1 eine Signalübertragungseinrichtung 7 zum Senden und Empfangen von Kommunikationssignalen, insbesondere zum/von dem Endgerät 2

Weiter dargestellt ist eine Energieversorgungseinrichtung 8, durch die ein Stromfluss durch eine Spulenstruktur der Primärwindungsstruktur 5 bereitgestellt werden kann.

Die Leiterbahnen L und Schaltelemente S sind hierbei derart angeordnet, dass in Abhängigkeit von verschiedenen Schaltzuständen voneinander verschiedene Spulenstrukturen, insbesondere Spulenstrukturen mit voneinander verschiedenen Spulenflächen, Spulenpositionen und/oder Spulengeometrien, ausgebildet werden können. Hierdurch kann in vorteilhafter Weise die Spulenstruktur der Primärwindungsstruktur 5 an eine Lage der Sekundärwindungsstruktur 4 im primärseitigen Koordinatensystem, also auch relativ zur Auflagefläche 3, eine geometrische Größe der Sekundärwindungsstruktur 3 sowie eine geometrische Form der Sekundärwindungsstruktur 4 angepasst werden. Durch die Anpassung ergibt sich in vorteilhafter Weise eine möglichst effiziente Energieübertragung auf induktive Weise.

Fig. 2 zeigt einen schematischen Schaltplan einer Leiterbahnanordnung 9 mit einer ersten Leiterbahn L1 und einer zweiten Leiterbahn L2 sowie einem Schaltelements S. Die Leiterbahnen L1, L2 sind hierbei im Wesentlichen kreisförmig ausgebildet. Die erste Leiterbahn L1 ist über das Schaltelement S, welches als Trennschaltelement ausgebildet ist, mit der zweiten Leiterbahn L2 elektrisch verbindbar. Weiter dargestellt ist ein Versorgungspotential V+ und ein Massepotential V-, wobei das Versorgungspotential V+ höher als das Massepotential V- ist. In einem geöffneten Zustand des Schaltelements S wird nur die erste Leiterbahn L1 bestromt, wodurch die erste Leiterbahn L1 ein elektromagnetisches Leistungsübertragungsfeld erzeugt. In einem geschlossenen Zustand des Schaltelements S wird zusätzlich auch die zweite Leiterbahn L2 bestromt, wodurch beide Leiterbahnen L1, L2 jeweils elektromagnetische Leistungsübertragungsfelder erzeugen. Im ersten Schaltzustand ist die ausgebildete Spulenstruktur insbesondere für Sekundärwindungsstrukturen 4 (siehe Fig. 1) geeignet, deren geometrische Größe kleiner ist als die Summe der Spulenflächen beider Leiterbahnen L1, L2 und die über der von der ersten Leiterbahn L1 umfassten Spielfläche angeordnet ist. Im zweiten Schaltzustand ist die ausgebildete Spulenstruktur insbesondere geeignet, induktive Energie an eine Sekundärwindungsstruktur 4 zu übertragen, deren Sekundärwindungsstruktur geometrisch größer als die Spulenfläche einer einzelnen Spulenstruktur ist.

Fig. 3 zeigt einen Schaltplan einer Leiterbahnanordnung 9 von Leiterbahnen L1, L2, L3 und einem Schaltelement S in einer weiteren Ausführungsform. Hierbei ist das Schaltelement S als Umschaltelement ausgebildet. In einem ersten Schaltzustand verbindet das Schaltelement S eine erste Leiterbahn L1 und eine dritte Leiterbahn L3, wodurch eine kreisförmige Spulenstruktur ausgebildet wird. In einem zweiten Schaltzustand verbindet das Schaltelement die dritte Leiterbahn L3 mit einer zweiten, kreisförmigen Leiterbahn L2, wodurch eine im Wesentlichen achtförmige Spulenstruktur ausgebildet wird.

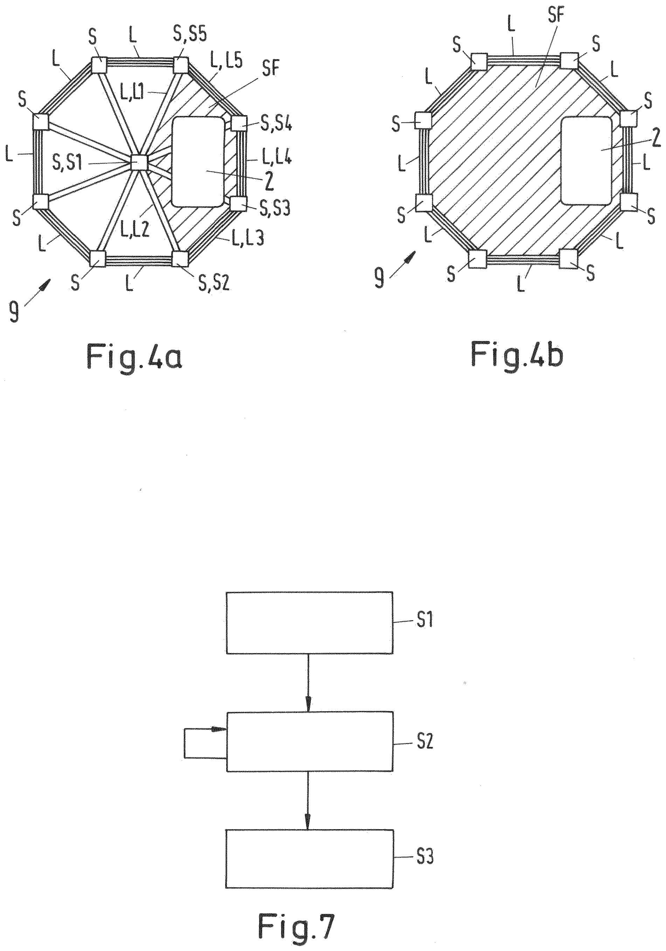

Fig. 4a zeigt einen weiteren Schaltplan einer Leiterbahnanordnung 9 von Leiterbahnen L und Schaltelementen S. Die Leiterbahnen L sind hierbei als im Wesentlichen gerade Leiterbahnen ausgeführt. Äußere Leiterbahnen L der Leiterbahnanordnung 9 bilden hierbei ein Achteck. An Eckpunkten dieses Achtecks ist jeweils ein Schaltelement S angeordnet. Weiter umfasst die in Fig. 4a dargestellte Leiterbahnanordnung 9 innere Leiterbahnen L, die jeweils die Schaltelemente S an den Eckpunkten mit einem im Zentrum des Achtecks angeordneten zentralen Schaltelement S verbinden. Weiter dargestellt ist eine Spulenfläche SF, die von der elektrisch in Reihe geschalteten Leiterbahnen L umrandet wird.

Weiter dargestellt ist ein Endgerät 2, welches über einem Teilbereich der maximal ausbildbaren Spulenfläche angeordnet ist. Insbesondere ist das Endgerät 2 über drei der acht dreieckförmigen Teilstrukturen angeordnet, die jeweils durch eine äußere Leiterbahn L zwischen zwei äußeren Schaltelementen S und zwei innere Leiterbahnen L, die die äußeren Schaltelemente S mit dem zentralen Schaltelement S verbinden, gebildet werden.

Hierbei ist ein Schaltzustand eines ersten Schaltelements S1, also des zentralen Schaltelements S1, derart eingestellt, dass eine erste, innere Leiterbahn L1 mit einer zweiten, inneren Leiterbahn L2 verbunden ist. Ein Schaltzustand eines zweiten Schaltelements S2 ist derart eingestellt, dass die zweite, innere Leiterbahn L2 mit einer dritten, äußeren Leiterbahn elektrisch verbunden ist. Ein Schaltzustand eines dritten Schaltelements S3 ist derart eingestellt, dass die dritte, äußere Leiterbahn elektrisch mit einer vierten, äußeren Leiterbahn L4 verbunden ist. Ein Schaltzustand eines vierten Schaltelementes S4 ist derart eingestellt, dass die vierte, äußere Leiterbahn L4 mit einer fünften, äußeren Leiterbahn L5 verbunden ist. Ein Schaltzustand eines fünften Schaltelements ist hierbei derart eingestellt, dass die fünfte, äußere Leiterbahn nicht mit der ersten Leiterbahn L1 elektrisch sondern beispielsweise mit einer Spannungsquelle (nicht dargestellt) verbunden ist. Auch die erste, innere Leiterbahn L1 kann mit der Spannungsquelle verbunden sein. Hierdurch wird eine fünfeckige Spulenstruktur ausgebildet, die eine Spulenfläche SF umranden, über der das Endgerät 2 angeordnet ist. Ein Strom kann beispielsweise in die erste innerer Leiterbahn L1 eingespeist werden und aus der fünften Leiterbahn L5 herausfließen.

Hierdurch kann die Spulenfläche SF der von der Leiterbahnanordnung 9 ausgebildeten Spulenstruktur an eine Größe des Endgeräts 2 somit an eine Größe der Sekundärwindungsstruktur 4 angepasst werden. Insbesondere ist die ausgebildete Spulenfläche SF die minimalste, ausbildbare Spulenfläche in der das Endgerät 2 in einer gemeinsamen Projektionsebene vollständig angeordnet ist, wenn das Endgerät 2 insbesondere entlang der Vertikalachse z (siehe Fig. 1) in die Spulenfläche SF projiziert wird.

In Fig. 4b ist ein Schaltplan der in Fig. 4a dargestellten Leiterbahnanordnung 9 dargestellt, wobei von der Leiterbahnanordnung 9 eine weitere Spulenstruktur ausgebildet wird. Hierbei sind der Übersichtlichkeit halber weder die inneren Leiterbahnen L noch das zentrale Schaltelement S dargestellt. Insbesondere sind die Schaltzustände der Schaltelemente S derart eingestellt, dass eine Spulenstruktur mit maximaler, ausbildbarer Spulenfläche SF ausgebildet wird. Die Spulenstruktur wird somit durch eine Serienschaltung der äußeren Leiterbahnen L ausgebildet. Die Schaltzustände der Schaltelemente S sind entsprechend eingestellt. Ein Strom kann beispielsweise in eine erste äußere Leiterbahn L der Reihenschaltung eingespeist werden und aus einer letzten Leiterbahn L der Reihenschaltung herausfließen

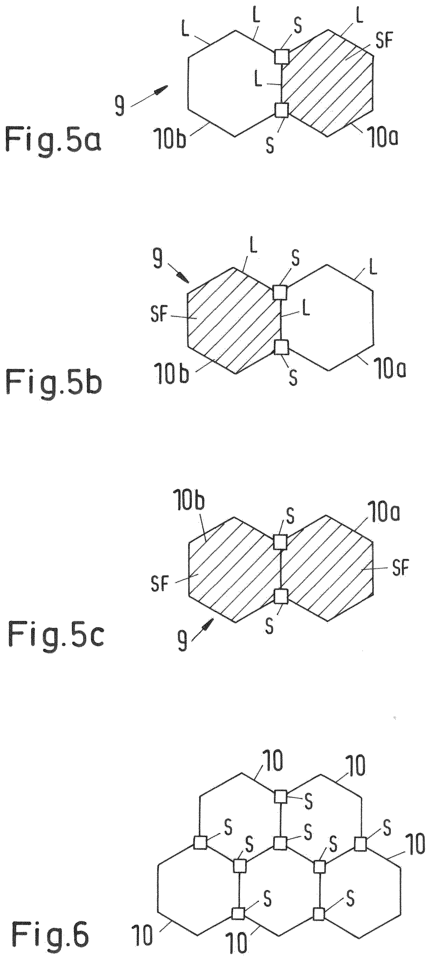

Fig. 5a zeigt einen Schaltplan einer Leiterbahnanordnung 9, die eine erste Spulenstruktur ausbilden. Hierbei sind die Leiterbahnen L derart angeordnet, dass die Spulenstruktur mit der minimalsten Spulenfläche SF aller bereitstellbaren Spulenflächen eine sechseckige Form aufweist. In Fig. 5a ist dargestellt, dass mit der Leiterbahnanordnung 9 zwei derartige, sechseckige Spulenstrukturen ausgebildet werden können, wobei eine zentrale Leiterbahn L Teil beider ausbildbaren Spulenstrukturen sein kann. In dem in Fig. 5a dargestellten Schaltbild sind Schaltzustände der Schaltelemente S derart eingestellt, dass die Leiterbahnanordnung 9 eine erste sechseckige Spulenstruktur 10a mit minimaler Spulenfläche SF als resultierende Spulenstruktur ausbildet.

In Fig. 5b ist ein weiteres Schaltbild der in Fig. 5a dargestellten Leiterbahnanordnung 9 dargestellt. Hierbei sind Schaltzustände der Schaltelemente S derart eingestellt, dass die resultierende Spulenstruktur von einer zweiten Spulenstruktur 10b mit minimaler Spulenfläche SF ausgebildet wird.

In Fig. 5c ist ein schematisches Schaltbild der in Fig. 5a dargestellten Leiterbahnanordnung 9 dargestellt, wobei Schaltzustände der Schaltelemente S derart eingestellt sind, dass die resultierende Spulenstruktur von beiden Spulenstrukturen 10a, 10b mit minimaler Spulenfläche SF ausgebildet wird. Die resultierende Spulenfläche beträgt somit das Doppelte der minimalen Spulenfläche SF.

Fig. 6 zeigt ein schematisches Schaltbild von bereitstellbaren sechseckigen Spulenstrukturen 10 mit minimaler Spulenfläche, wobei an ausgewählten Eckpunkten dieser sechseckigen Spulenstrukturen 10 jeweils Schaltelemente S angeordnet sind. Je nach Einstellung von Schaltzuständen dieser Schaltelemente S, die insbesondere als Umschaltelemente ausgebildet sein können, können verschiedene resultierende Spulenstrukturen ausgebildet werden.

Fig. 7 zeigt ein schematisches Blockschaltbild eines erfindungsgemäßen Verfahrens zur Erzeugung eines elektromagnetischen Feldes zur induktiven Energieübertragung, welches mit einer Vorrichtung 1 (siehe Fig. 1) durchgeführt werden kann. In einem ersten Schritt S1 werden Schaltzustände von Schaltelementen S einer Leiterbahnanordnung 9 (siehe z.B. Fig. 5a) derart eingestellt, dass eine resultierende Spulenstruktur mit maximaler Spulenfläche ausgebildet wird. Hiernach wird ein Stromfluss durch diese Spulenstruktur erzeugt.

In einem zweiten Schritt S2 überträgt das Endgerät 2 Informationen zur empfangenen Leistung über z.B. die in Fig. 1 dargestellte Signalübertragungseinrichtung 7 an die Vorrichtung 1. In Abhängigkeit dieser Information können die Schaltzustände der Schaltelemente S derart eingestellt werden, dass eine weitere Spulenstruktur, insbesondere eine Spulenstruktur mit einer im Vergleich zur maximalen Spulenfläche kleineren Spulenfläche, ausgebildet wird. Dies kann insbesondere dann erfolgen, wenn die durch die Spulenstruktur übertragene Leistung nicht ausreicht, um das Endgerät 2 zu laden. Der zweite Schritt S2 kann wiederholt werden, wobei in jedem Wiederholungsschritt voneinander verschiedene Spulenstrukturen durch Einstellen verschiedener Schaltzustände der Schaltelemente S ausgebildet werden. Hierbei kann die Ausbildung verschiedener Spulenstrukturen solange erfolgen, bis alle oder eine vorbestimmte Auswahl von ausbildbaren Spulenstrukturen ausgebildet wurden. In einem dritten Schritt S3 kann dann die Spulenstruktur durch Einstellen der Schaltzustände ausgebildet werden, in der die Energieübertragung am effizientesten war. Auch kann in einem dritten Schritt S3 das Einstellen verschiedener Spulenstrukturen beendet werden, wenn eine Spulenstruktur eingestellt ist, mit der ausreichend Leistung zum Endgerät 2 übertragen wird.

### Bezugszeichenliste

- 1: Vorrichtung
- 2: Endgerät
- 3: Auflagefläche
- 4: Sekundärwindungsstruktur
- 5: Primärwindungsstruktur
- 6: Steuereinrichtung
- 7: Signalübertragungseinrichtung
- 8: Energieversorgungseinrichtung
- 9: Leiterbahnanordnung
- L: Leiterbahn
- L1: erste Leiterbahn
- L2: zweite Leiterbahn
- L3: dritte Leiterbahn
- L4: vierte Leiterbahn
- L5: fünfte Leiterbahn
- S: Schaltelement
- S1: erstes Schaltelement
- S2: zweites Schaltelement
- S3: drittes Schaltelement
- S4: viertes Schaltelement
- S5: fünftes Schaltelement
- V+: Versorgungspotential
- V-: Massepotential
- S1: erster Schritt
- S2: zweiter Schritt
- S3: dritter Schritt
- 10a: erste Spulenstruktur
- 10b: zweite Spulenstruktur

## Patentansprüche

1. Vorrichtung zur Erzeugung eines elektromagnetischen Felds zur induktiven Energieübertragung zu einem mobilen Endgerät (2), wobei die Vorrichtung (1) mehrere elektrische Verbindungselemente zur Bildung einer Spulenstruktur und mindestens ein
Schaltelement (S) umfasst, wobei durch das mindestens eine Schaltelement (S) mindestens zwei elektrische Verbindungselemente elektrisch verbindbar sind, wobei in einem ersten Schaltzustand des mindestens einen Schaltelements (S) die elektrischen Verbindungselemente eine Spulenstruktur mit ersten Spuleneigenschaften ausbilden, wobei in einem weiteren Schaltzustand des mindestens einen Schaltelements (S) die elektrischen Verbindungselemente eine weitere
Spulenstruktur mit weiteren Spuleneigenschaften ausbilden,
**dadurch gekennzeichnet, dass**
durch das mindestens eine Schaltelement (S) mindestens drei elektrische Verbindungselemente elektrisch verbindbar sind, wobei in dem ersten Schaltzustand ein erstes elektrisches Verbindungselement mit einem zweiten elektrischen Verbindungselement elektrisch verbunden ist, wobei in dem mindestens einen weiteren Schaltzustand das erste elektrische Verbindungselement mit einem weiteren elektrischen Verbindungselement verbunden ist.

2. Vorrichtung nach Anspruch 1, **dadurch gekennzeichnet, dass** die elektrischen Verbindungselemente mittels des mindestens eines Schaltelements (S) zu einer polygonalen Spulenstruktur verschaltet werden können, wobei das mindestens eine Schaltelement (S) an einem Eckpunkt der polygonalen Spulenstruktur angeordnet ist.

3. Vorrichtung nach Anspruch 2, **dadurch gekennzeichnet, dass** die elektrischen Verbindungselemente zu mindestens einer hexagonalen Spulenstruktur (10, 10a, 10b) verschaltet werden können.

4. Vorrichtung nach Anspruch 2 oder 3, **dadurch gekennzeichnet, dass** das mindestens eine Schaltelement (S) an einem Eckpunkt mehrerer ausbildbarer polygonaler Spulenstrukturen angeordnet ist.

5. Vorrichtung nach einem der vorangegangenen Ansprüche, **dadurch gekennzeichnet, dass** die in einem Schaltzustand des mindestens einen Schaltelements (S) ausgebildete Spulenstruktur mehrere Windungen aufweist.

6. Vorrichtung nach einem der vorangegangenen Ansprüche, **dadurch gekennzeichnet, dass** die Vorrichtung (1) eine Kommunikationseinrichtung (7) zur Datenübertragung zwischen dem Endgerät (2) und einer Auswerteeinrichtung der Vorrichtung (1) umfasst.

7. Vorrichtung nach einem der vorangegangenen Ansprüche, **dadurch gekennzeichnet, dass** die Vorrichtung (1) eine Steuereinrichtung (6) zur Einstellung der Schaltzustände des mindestens einen Schaltelements (S) umfasst.

8. Vorrichtung nach einem der vorangegangenen Ansprüche, **dadurch gekennzeichnet, dass** die Vorrichtung (1) mindestens ein Mittel zur Ermittlung einer Relativlage zwischen dem Endgerät und den elektrischen Verbindungselementen umfasst, wobei die Spuleneigenschaften einer auszubildenden Spule in Abhängigkeit der Relativlage bestimmt werden, wobei der Schaltzustand des mindestens einen Schaltelements (S) in Abhängigkeit der Spuleneigenschaft eingestellt wird.

9. Verfahren zur Erzeugung eines elektromagnetischen Felds zur induktiven Energieübertragung zu einem mobilen Endgerät (2), mittels einer Vorrichtung (1) gemäß einem der Ansprüche 1 bis 8, wobei ein Schaltzustand des mindestens einen Schaltelements (S) derart eingestellt wird, dass eine Spulenstruktur mit gewünschten Spuleneigenschaften durch die elektrischen Verbindungselemente ausgebildet wird, wobei ein Stromfluss durch die Spulenstruktur erzeugt wird.

10. Verfahren nach Anspruch 9, **dadurch gekennzeichnet, dass** das Endgerät (2) Informationen zur benötigten Energie an eine Steuer- und/oder Auswerteeinrichtung (6) der Vorrichtung (1) überträgt, wobei durch Einstellen der Schaltzustände des mindestens einen Schaltelements (S) zeitlich nacheinander Spulenstrukturen mit voneinander verschiedenen Spuleneigenschaften ausgebildet werden, wobei ein Stromfluss durch jede der ausgebildeten Spulenstrukturen erzeugt wird, wobei für jeden Spulenstruktur die an das Endgerät (2) übertragene Energie bestimmt wird, wobei durch Einstellen der Schaltzustände des mindestens einen Schaltelements (S) dann eine resultierende Spulenstruktur ausgebildet wird, mit der die übertragene Energie maximal ist oder mit der die benötigte Energie übertragen wird, wobei ein Stromfluss durch die resultierende Spulenstruktur erzeugt wird.

11. Verfahren nach Anspruch 10, **dadurch gekennzeichnet, dass** die erste ausgebildete Spulenstruktur die Spulenstruktur mit maximaler Spulenfläche ist.

## Claims

1. Device for generating an electromagnetic field for inductive energy transmission to a mobile terminal (2), the device (1) comprising a plurality of electrical connection elements for forming a coil structure and at least one switch element (S), at least two electrical connection elements being electrically connectable by the at least one switch element (S), wherein in a first switching state of the at least one switch element (S) the electrical connection elements form a coil structure with first coil properties, wherein in a further switching state of the at least one switch element (S) the electrical connection elements form a further coil structure with further coil properties,
**characterised in that**
at least three electrical connection elements are electrically connectable by means of the at least one switch element (S), wherein in the first switching state a first electrical connection element is electrically connected to a second electrical connection element, wherein in the at least one further switching state the first electrical connection element is connected to a further electrical connection element.

2. Device according to claim 1, **characterised in that** the electrical connection elements can be connected by means of the at least one switch element (S) to form a polygonal coil structure, the at least one switch element (S) being arranged at a corner point of the polygonal coil structure.

3. Device according to claim 2, **characterised in that** the electrical connection elements can be connected to form at least one hexagonal coil structure (10, 10a, 10b).

4. Device according to claim 2 or 3, **characterised in that** the at least one switch element (S) is arranged at a corner point of a plurality of formable polygonal coil structures.

5. Device according to any one of the preceding claims, **characterised in that** the coil structure formed in a switching state of the at least one switch element (S) has a plurality of turns.

6. Device according to any one of the preceding claims, **characterised in that** the device (1) comprises a communication unit (7) for transmitting data between the terminal (2) and an evaluation unit of the device (1).

7. Device according to any one of the preceding claims, **characterised in that** the device (1) comprises a control unit (6) for setting the switching states of the at least one switch element (S).

8. Device according to any one of the preceding claims, **characterised in that** the device (1) comprises at least one means for determining a relative position between the terminal and the electrical connection elements, the coil properties of a coil that is to be formed being determined as a function of the relative position, the switching state of the at least one switch element (S) being set as a function of the coil property.

9. Method for generating an electromagnetic field for inductive energy transmission to a mobile terminal (2), by means of a device (1) according to any one of claims 1 to 8, wherein a switching state of the at least one switch element (S) is set in such a way that a coil structure with desired coil properties is formed by the electrical connection elements, wherein a current flow is generated through the coil structure.

10. Method according to claim 9, **characterised in that** the terminal (2) transmits information on the required energy to a control and/or evaluation unit (6) of the device (1), wherein by setting the switching states of the at least one switch element (S) coil structures with coil properties differing from one another are configured successively in time, wherein a current flow is generated through each of the formed coil structures, wherein the energy transmitted to the terminal (2) is determined for each coil structure, wherein by setting the switching states of the at least one switch element (S) a resulting coil structure is then formed, with which the transmitted energy is at a maximum or with which the required energy is transmitted, wherein a current flow is generated through the resulting coil structure.

11. Method according to claim 10, **characterised in that** the coil structure that is formed first is the coil structure with maximum coil area.

## Revendications

1. Dispositif pour générer un champ électromagnétique pour la transmission inductive d'énergie à un terminal mobile (2), dans lequel le dispositif (1) comprend plusieurs éléments de connexion électriques pour former une structure de bobine et au moins un élément de commutation (S), dans lequel au moins deux éléments de connexion électriques peuvent être connectés électriquement par l'au moins un élément de commutation (S), dans lequel, dans un premier état de commutation de l'au moins un élément de commutation (S), les éléments de connexion électriques forment une structure de bobine avec de premières propriétés de bobine, dans lequel, dans un état de commutation supplémentaire de l'au moins un élément de commutation (S), les éléments de connexion électriques réalisent une structure de bobine supplémentaire avec des propriétés de bobine supplémentaires,
**caractérisé en ce**
**qu'**au moins trois éléments de connexion électriques peuvent être connectés électriquement par l'intermédiaire de l'au moins un élément de commutation (S), dans lequel un premier élément de connexion électrique est connecté électriquement à un second élément de connexion électrique dans le premier état de commutation, dans lequel le premier élément de connexion électrique est connecté à un autre élément de connexion électrique dans l'au moins un autre état de commutation.

2. Dispositif selon la revendication 1, **caractérisé en ce que** les éléments de connexion électriques peuvent être connectés au moyen de l'au moins un élément de commutation (S) à une structure de bobine polygonale, dans lequel l'au moins un élément de commutation (S) est disposé à un point d'angle de la structure de bobine polygonale.

3. Dispositif selon la revendication 2, **caractérisé en ce que** les éléments de connexion électriques peuvent être connectés à au moins une structure de bobine hexagonale (10, 10a, 10b).

4. Dispositif selon la revendication 2 ou 3, **caractérisé en ce que** l'au moins un élément de commutation (S) est disposé à un point d'angle de plusieurs structures de bobines polygonales formables.

5. Dispositif selon l'une quelconque des revendications précédentes, **caractérisé en ce que** la structure de bobine réalisée dans un état de commutation de l'au moins un élément de commutation (S) présente plusieurs spires.

6. Dispositif selon l'une quelconque des revendications précédentes, **caractérisé en ce que** le dispositif (1) comprend un appareil de communication (7) pour la transmission de données entre le terminal (2) et un appareil d'évaluation du dispositif (1).

7. Dispositif selon l'une quelconque des revendications précédentes, **caractérisé en ce que** le dispositif (1) comprend un appareil de commande (6) pour régler les états de commutation de l'au moins un élément de commutation (S).

8. Dispositif selon l'une quelconque des revendications précédentes, **caractérisé en ce que** le dispositif (1) comprend au moins un moyen de détermination d'une position relative entre le terminal et les éléments de connexion électriques, dans lequel les propriétés de bobine d'une bobine à former sont déterminées en fonction de la position relative, dans lequel l'état de commutation de l'au moins un élément de commutation (S) est réglé en fonction de la propriété de bobine.

9. Procédé de génération d'un champ électromagnétique pour la transmission inductive d'énergie à un terminal mobile (2), au moyen d'un dispositif (1) selon l'une quelconque des revendications 1 à 8, dans lequel un état de commutation de l'au moins un élément de commutation (S) est réglé de sorte qu'une structure de bobine avec des propriétés de bobine souhaitées est réalisée par les éléments de connexion électriques, dans lequel un flux de courant est généré par l'intermédiaire de la structure de bobine.

10. Procédé selon la revendication 9, **caractérisé en ce que** le terminal (2) transmet des informations sur l'énergie requise à un appareil de commande et/ou d'évaluation (6) du dispositif (1), dans lequel des structures de bobine avec des propriétés de bobine différentes les unes des autres sont réalisées successivement dans le temps en réglant les états de commutation de l'au moins un élément de commutation (S), dans lequel un flux de courant est généré par l'intermédiaire de chacune des structures de bobine réalisées, dans lequel, l'énergie transmise au terminal (2) est déterminée pour chaque structure de bobine, dans lequel une structure de bobine résultante est alors réalisée en réglant les états de commutation de l'au moins un élément de commutation (S), avec laquelle l'énergie transmise est maximale ou avec laquelle l'énergie requise est transmise, dans lequel un flux de courant est généré par l'intermédiaire de la structure de bobine résultante.

11. Procédé selon la revendication 10, **caractérisé en ce que** la première structure de bobine réalisée est la structure de bobine avec une surface de bobine maximale.
